# EUROPEAN PATENT SPECIFICATION

(11) **EP 3 282 755 B1**
(45) Date of publication and mention of the grant of the patent: **22.09.2021**
(21) Application number: 16776028.9
(22) Date of filing: 24.02.2016
(51) Int. Cl.: H04W 36/00, H04W 36/12, H04W 88/04, H04W 84/04

(54) **RELAY NODE SWITCHING METHOD AND SYSTEM**
VERFAHREN UND SYSTEM ZUR RELAISKNOTENUMSCHALTUNG
PROCÉDÉ ET SYSTÈME DE COMMUTATION DE NOEUD RELAIS

(30) Priority: 09.04.2015 CN 201510166115
(43) Date of publication of application: 14.02.2018
(73) Proprietor: ZTE Corporation, Shenzhen, Guangdong 518057 (CN)
(72) Inventor: HUANG, Ying, Shenzhen Guangdong 518057 (CN); CHEN, Lin, Shenzhen Guangdong 518057 (CN); LUO, Wei, Shenzhen Guangdong 518057 (CN); GAO, Yin, Shenzhen Guangdong 518057 (CN)
(74) Representative: Novagraaf Technologies
(86) International application number: PCT/CN2016/074475
(87) International publication number: WO 2016/161853

(56) References cited:
- WO-A1-2011/109027
- WO-A1-2014/014323
- WO-A1-2014/086204
- WO-A1-2015/020398
- WO-A1-2015/026200
- CN-A- 103 096 393
- CN-A- 103 702 373
- POTEVIO: "Prose operation during mobility", 3GPP DRAFT; R2-144446 D2D OPERATION UPON MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Shanghai, China; 20141006 - 20141010 5 October 2014 (2014-10-05), XP050876640, Retrieved from the Internet: URL:http://www.3gpp.org/ftp/Meetings_3GPP_ SYNC/RAN2/Docs/ [retrieved on 2014-10-05]
- ERICSSON: "Mobility for D2D UEs", 3GPP DRAFT; R3-132277, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. San Francisco, USA; 20131111 - 20131115 13 November 2013 (2013-11-13), XP050738418, Retrieved from the Internet: URL:http://www.3gpp.org/ftp/Meetings_3GPP_ SYNC/RAN/RAN3/Docs/ [retrieved on 2013-11-13]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 12)", 3GPP DRAFT; 36300-C50, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 March 2015 (2015-03-24), XP050952068, Retrieved from the Internet: URL:http://www.3gpp.org/ftp/tsg_ran/WG2_RL 2/Specifications/201503_final_specs_after_ RAN_67/ [retrieved on 2015-03-24]
- "3rd Generation Partnership Project; Technical Specification Group Services and System Aspects; General Packet Radio Service (GPRS) enhancements for Evolved Universal Terrestrial Radio Access Network (E-UTRAN) access (Release 13)", 3GPP DRAFT; 23401-D20, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2 24 March 2015 (2015-03-24), XP050961178, Retrieved from the Internet: URL:http://www.3gpp.org/ftp/tsg_sa/WG2_Arc h/Latest_SA2_Specs/Rel-13/ [retrieved on 2015-03-24]
- ZTE: "Discussion on the ProSe Authorization Information", 3GPP DRAFT; R3-142265, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Shanghai, P.R.China; 20141006 - 20141010 26 September 2014 (2014-09-26), XP050870777, Retrieved from the Internet: URL:http://www.3gpp.org/ftp/tsg_ran/WG3_Iu /TSGR3_85bis/Docs/ [retrieved on 2014-09-26]

## Description

### Technical Field

The invention relates to the field of communications, and more particularly, to a method and system for switching a relay node.

### Background

Along with the development of a wireless multimedia service, the demand of people on high data rate and user experience is increased day by day and therefore there raises a higher requirement for system capacity and coverage of the conventional cellular network. On the other hand, applications such as social networking, short-distance data sharing and local advertising have become popular, such that the requirement of the people to know an interesting person or thing nearby and communicate with that (Proximity Services) is gradually increased. The conventional cell-based cellular network has obvious limitations in respect of supporting the high data rate and the proximity services. Under such circumstances, a Device-to-Device (D2D) technology representing a new development trend of future communications is emerging. With the application of the D2D technology, the load of the cellular network may be alleviated, the battery power consumption of User Equipment (UE) is reduced, the data rate is increased, the robustness of a network infrastructure is improved, and the requirement of the above high data rate services and the proximity services is met well.

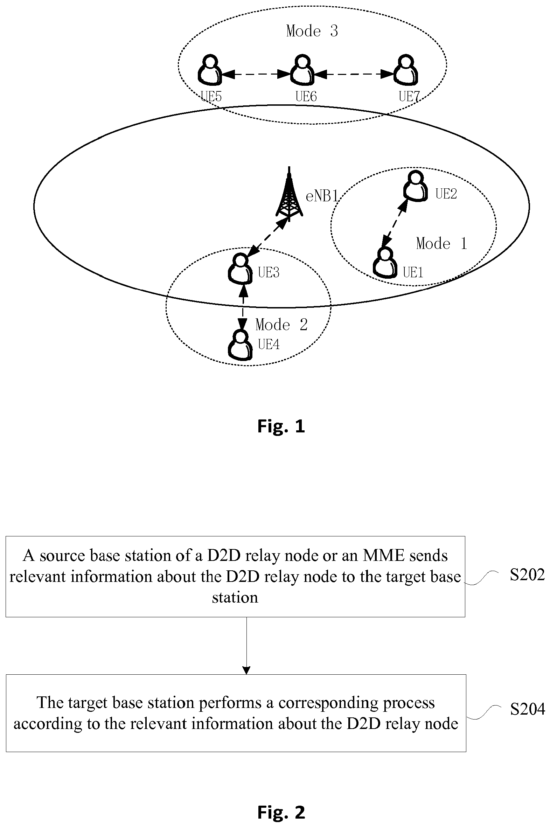

The D2D technology may work at an authorized frequency band or an unauthorized frequency band. It allows a plurality of D2D UEs supporting a D2D function to perform direct discovery/direct communication in the presence or absence of the network infrastructure. Fig. 1 is a systematic diagram of an application mode of a D2D technology in the related art, and there are mainly three application scenes of the D2D.
(1) The data interaction is performed between the UE1 and the UE2 under the coverage of the cellular network and the data on a user interface does not pass through the network infrastructure, such as a first mode in Fig. 1.
(2) The UE relay is adopted in transmission in a weak/uncovered area, such as a second mode in Fig. 1; it allows the UE4 having a relatively poor signal quality to communicate with the network by means of the UE3 having the network coverage nearby, which can help an operator to expand the coverage and improve the capacity.
(3) Under the condition that there is an earthquake or emergency situation and the cellular network cannot normally work, the direct communication is allowed among the UEs, such as a third mode in Fig. 1; the one-hop or multi-hop data communication is performed between control interfaces and user interfaces of the UE5, UE6 and UE7 without the network infrastructure.

Generally, the D2D technology includes a D2D discovery technology and a D2D communication technology.
1) The D2D discovery technology refers to a technology configured to judge/determine that two or more D2D UEs are proximate to each other (such as in a range where the D2D direct communication can be performed) or configured to judge/determine that a first UE is proximate to a second UE.
2) The D2D communication technology refers to a technology through which communication data among the D2D UEs, in whole or in part, may be directly communicated without the network infrastructure.

In the above scenes (2) and (3), the D2D UE may be served as a relay node, such that a remote D2D UE at the edge of the coverage of the cellular network or out of the coverage can perform cellular communication with the network by means of the relay node UE, and the D2D communication is performed among the D2D UEs by means of the relay node UE. However, in the scene where the relay UE moves, the relay UE possibly has a cell handover and is switched from one base station to another base station; and a target base station to which the relay UE is switched may not support the D2D relay or has no information about the relay UE. In the related art, there does not provide a relay UE cell switching method, such that the D2D relay functions of the relay UE cannot be implemented correctly and thus the continuity of communication services of the D2D UE accessed by the relay UE is affected.

For the problem of the low continuity of the communication services of the D2D UE accessed by the relay UE in a process of switching the relay nodes, namely, relay UE cells in the related art, there hasn't yet provided an effective solution.

Document WO 2011/109027 A1 discloses handover of direct peer to peer communication.

### Summary

For the problem of low continuity of communication services of a D2D UE accessed by a relay UE in a process of switching relay nodes, namely, relay UE cells in the related art, as there hasn't yet provided an effective solution, the invention provides a method and system for switching a relay node, so as to at least solve the above problem.

The present invention provides a method for switching a relay node according to claim 1 and a system for switching a relay node according to claim 14. Embodiments of the invention are defined in the dependent claims.

According to one aspect of the invention, a method for switching a relay node is provided, which includes: a source base station of a D2D relay node or an MME (Mobile Management Entity) sends relevant information about the D2D relay node to a target base station, and the target base station processes correspondingly according to the relevant information about the D2D relay node.

According to another aspect of the invention, a system for switching a relay node is further provided, which includes: a first sending module, configured to enable that a source base station of a D2D relay node or an MME sends relevant information about the D2D relay node to a target base station, and a configuration module, configured to enable that the target base station processes correspondingly according to the relevant information about the D2D relay node.

In the above aspects of the invention, the source base station of the D2D relay node or the MME sends the relevant information about the D2D relay node to the target base station, and the target base station processes correspondingly according to the relevant information about the D2D relay node, so the problem of the low continuity of the communication services of the D2D UE accessed by the relay UE in the process of switching the relay nodes, namely, the relay UE cells, is solved, thereby improving the continuity of the communication services of the D2D UE accessed by the relay UE during switching of the relay UE cells.

### Brief Description of the Drawings

The accompanying drawings are described here to provide a further understanding of the invention, and form a part of the invention. The schematic embodiments and description of the invention are adopted to explain the invention, and do not form limits to the invention.
Fig. 1 is a systematic diagram of an application mode of a D2D technology in the related art.
Fig. 2 is a first flowchart of a method for switching a relay node according to an embodiment of the invention.
Fig. 3 is a second flowchart of a method for switching a relay node according to an aspect of the invention.
Fig. 4 is a first structure diagram of a system for switching a relay node according to an embodiment of the invention.
Fig. 5 is a second structure diagram of a system for switching a relay node according to an aspect of the invention.
Fig. 6 is a flowchart of a method that a relay UE has an X2 handover according to a preferred embodiment of the invention.
Fig. 7 is a flowchart of a method that a relay UE has an S1 handover according to a preferred embodiment of the invention.

### Detailed Description of the Embodiments

The invention is described below with reference to the drawings and embodiments in detail. It should be noted that the embodiments of the invention and the characteristics of the embodiments may be combined with each other if there is no conflict.

It is to be noted that the terms "first" , "second" and the like in the description, the claims and the above accompanying drawings, if any, may be used for distinguishing between similar elements and not necessarily for describing a particular sequential or chronological order.

In an aspect a method for switching a relay node is provided. Fig. 2 is a first flowchart of a method for switching a relay node according to an aspect of the invention. As shown in Fig. 2, the flowchart includes the following steps.

In step S202, a source base station of a D2D relay node or an MME sends relevant information about the D2D relay node to a target base station.

In step S204, the target base station processes correspondingly according to the relevant information about the D2D relay node.

Through the above steps, the source base station of the D2D relay node or the MME sends the relevant information about the D2D relay node to the target base station, and the target base station processes correspondingly according to the relevant information about the D2D relay node, so the problem of the low continuity of the communication services of the D2D UE accessed by the relay UE in the process of switching the relay nodes, namely, the relay UE cells, is solved, thereby improving the continuity of the communication services of the D2D UE accessed by the relay UE during switching of the relay UE cells.

In an embodiment, that the MME sends the relevant information about the D2D relay node to the target base station includes: the MME sends the relevant information about the D2D relay node to the target base station of the D2D relay node through an S1 interface message, and the S1 interface message includes at least one of the following: a UE CONTEXT MODIFICATION REQUEST message, and a PATH SWITCH REQUEST ACKNOWLEDGE message.

In an embodiment, that the target base station processes correspondingly according to the relevant information about the D2D relay node after receiving the relevant information about the D2D relay node sent by the MME of the D2D relay node includes: the target base station determines D2D relay configuration information of the D2D relay node and sends the D2D relay configuration information to the D2D relay node via an air interface.

In an embodiment, before the source base station of the D2D relay node sends the relevant information about the D2D relay node to the target base station, the method further includes:
the source base station of the D2D relay node obtains the relevant information about the D2D relay node through an air interface or an X2 interface message or an S1 interface message, and the X2 interface message is an X2 interface handover request message; the S1 interface message includes at least one of the following: an INITIAL CONTEXT SETUP REQUEST message, a UE CONTEXT MODIFICATION REQUEST message, a HANDOVER REQUEST message and a PATH SWITCH REQUEST ACKNOWLEDGE message.

In an embodiment, that the source base station of the D2D relay node sends the relevant information about the D2D relay node to the target base station includes one of the following: the source base station of the D2D relay node sends the relevant information about the D2D relay node to the target base station through the X2 interface message; the source base station of the D2D relay node sends the relevant information about the D2D relay node to the target base station through the S1 interface message.

In an embodiment, that the source base station of the D2D relay node sends the relevant information about the D2D relay node to the target base station through the S1 interface message includes: the source base station sends the relevant information about the D2D relay node to the MME through the handover request message, and then, the MME sends the relevant information about the D2D relay node to the target base station through the S1 interface handover request message.

In an embodiment, that the source base station of the D2D relay node sends the relevant information about the D2D relay node to the target base station through the X2 interface message includes: the source base station sends the relevant information about the D2D relay node to the target base station through the X2 interface handover request message.

In an embodiment, the relevant information about the D2D relay node includes at least one of the following: relay capability information of the D2D relay node, and the relay capability information includes at least one of the following: an indication for whether to support a D2D relay; an indication for whether to support a D2D relay from a UE to a network ; and an indication for whether to support a D2D relay from a UE to another UE; an indication for whether being served as a D2D relay node; an indication for whether having an interest to serve as the D2D relay node; an indication for whether having a capability to serve as the D2D relay node; an indication for whether authorized to serve as the D2D relay node; the type of the D2D relay node that is being served as or has the interest to serve as or has the capability to serve as or is authorized to serve as the D2D relay node, and the type of the D2D relay node includes: a D2D relay node for a relay from the UE to the network; and a D2D relay node for a relay from a UE to another UE; D2D resource information used by D2D discovery performed between the D2D relay node and a D2D UE served by the D2D relay node; D2D resource information used for a D2D communication between the D2D relay node and the D2D UE served by the D2D relay node; and power-saving configuration information of the D2D relay node.

In an embodiment, the indication for whether being served as the D2D relay node, the indication for whether having the interest to serve as the D2D relay node, the indication for whether having the capability to serve as the D2D relay node, and an indication for whether authorized to serve as the D2D relay node correspondingly include at least one of the following: an indication for whether being served as the relay node for a relay from the UE to the network; an indication for whether having the interest to serve as the relay node for a relay from the UE to the network; an indication for whether having the capability to serve as the relay node for a relay from the UE to the network; an indication for whether authorized to serve as the relay node for a relay from the UE to the network; the indication for whether being served as the D2D relay node from a UE to another UE; the indication for whether having the interest to serve as the D2D relay node from a UE to another UE; the indication for whether having the capability to serve as the D2D relay node from a UE to another UE; and an indication for whether authorized to serve as a D2D relay node for a relay from a UE to another UE.

In an embodiment, the D2D resource information includes at least one of the following: subframe pattern indication information, subframe cycle indication information, physical frequency domain resource block index indication information, resource pool information, symbol index indication information, and PLMN information.

In an embodiment, the power-saving configuration information of the D2D relay node includes at least one of the following: an indication for enabling a relay node power-saving mechanism, a relay active state timer, a relay inactive state monitoring cycle, a monitoring frame/subframe offset and a monitoring duration.

In an embodiment, that the target base station processes correspondingly according to the relevant information about the D2D relay node includes one of the following:
the target base station determines to perform a handover, the target base station supports corresponding D2D functions, and the target base station determines the D2D relay configuration information of the D2D relay node and sends the D2D relay configuration information to the D2D relay node via the source base station;
the target base station determines to perform the handover, the target base station not supports the corresponding D2D functions, and the target base station replies a handover response message that excludes the D2D relay configuration information of the D2D relay node to the source base station; and
the target base station determines not to perform the handover, and replies a handover failed message to the source base station.

In an aspect, that the target base station replies the handover failed message to the source base station includes one of the following: the target base station sends an S1 interface handover failed message to the MME, and the MME sends the S1 interface handover failed message to the source base station; the target base station sends an X2 interface handover preparation failed message to the source base station.

In an embodiment, the reasons for that the target base station determines not to perform the handover include at least one of the following:
the target base station not supports the relay function from the D2D UE to the network or from the D2D UE to another UE.
the target base station not supports the relay function from the D2D UE to the network.
the target base station not supports the relay function from the D2D UE to another UE, and the target base station not supports a D2D relay power-saving function.

After the D2D relay node is accessed to the target base station, the target base station determines the D2D relay configuration information of the D2D relay node, and sends the D2D relay configuration information to the D2D relay node by means of the air interface.

In an embodiment, after the target base station determines to perform the handover, the target base station not supports the corresponding D2D functions, and the target base station replies the handover response message that excludes the D2D relay configuration information of the D2D relay node to the source base station, the method includes: the source base station sends indication information to the D2D relay node; and the source base station sends the indication information to the D2D relay node via an air interface handover command, and the indication information includes at least one of the following: a D2D relay connection release indication, an indication that the target base station not supports the D2D relay functions, and available D2D relay node information; the available D2D relay node information includes at least one of the following: time domain and/or frequency domain resource information used by an available D2D relay node; and identification information of the available D2D relay node.

In an embodiment, after the D2D relay node receives the indication information sent by the source base station, the method includes: the D2D relay node sends the indication information to the served D2D UE, the indication information including at least one of the following: a D2D relay connection release indication, an indication that the target base station not supports the D2D relay functions, and available D2D relay node information.

In an embodiment, the D2D relay configuration information includes at least one of the following:
an indication for whether to serve as the D2D relay node;
an indication for whether to serve as the relay node for a relay from the D2D UE to the network;
an indication for whether to serve as the relay node for a relay from the D2D UE to another UE;
a type of the served D2D relay node, and the type of the D2D relay node includes: a D2D relay node for a relay from the UE to the network; and a D2D relay node for a relay from a UE to another UE;
D2D resource information that can be used by D2D discovery performed between the D2D relay node and the served D2D UE, and/or D2D resource information that can be used for a D2D communication between the D2D relay node and the served D2D UE; and
power-saving configuration information of the D2D relay node.

In an embodiment, that the target base station determines the D2D relay configuration information of the D2D relay node, and sends the D2D relay configuration information to the D2D relay node via the source base station includes:
the target base station sends the D2D relay configuration information to the source base station via the S1 interface or X2 interface message, and the source base station sends the D2D relay configuration information to the D2D relay node via the air interface.

In an embodiment, that the target base station sends the D2D relay configuration information to the source base station via the S1 interface message includes: the target base station sends the relevant information about the D2D relay node to the MME through a handover request acknowledgement message, and then, the MME sends the relevant information about the D2D relay node to the source base station through an S1 interface handover command message.

In an embodiment, that the target base station sends the D2D relay configuration information to the source base station via the X2 interface message includes: the target base station sends the relevant information about the D2D relay node to the source base station through an X2 interface handover request acknowledgment message.

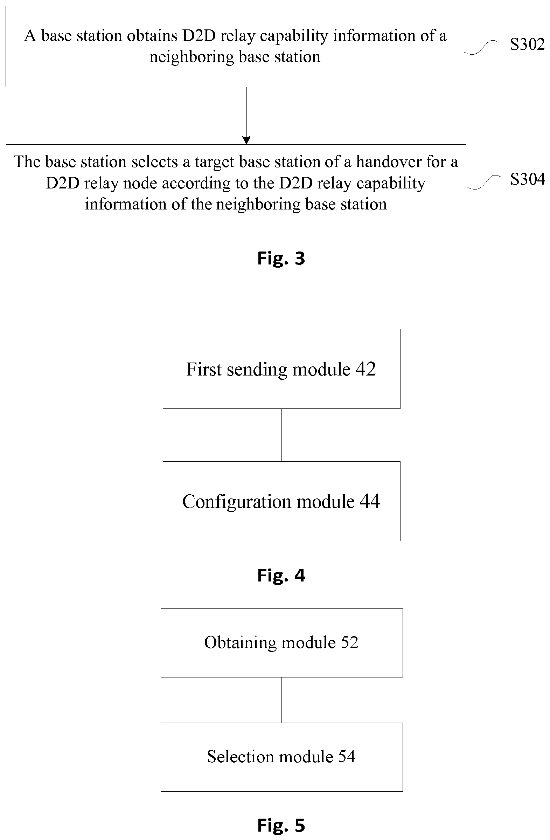

In an aspect of the invention not covered by the claims, a method for switching a relay node is provided. Fig. 3 is a second flowchart of a method for switching a relay node according to an aspect of the invention. As shown in Fig. 3, the method for switching a relay node includes the following steps.

In step S302, a base station obtains D2D relay capability information of a neighboring base station.

In step S304, the base station selects a target base station of a handover for a D2D relay node according to the D2D relay capability information of the neighboring base station.

Through the above steps, the base station obtains the D2D relay capability information of the neighboring base station through an X2 interface message, and the base station selects the target base station of the handover for the D2D relay node according to the D2D relay capability information of the neighboring base station, so the problem of the low continuity of the communication services of the D2D UE accessed by the relay UE in the process of switching the relay nodes, namely, the relay UE cells, is solved, thereby improving the continuity of the communication services of the D2D UE accessed by the relay UE during switching of the relay UE cells.

In an aspect, the method further includes the following steps:
the base station obtains the D2D relay capability information of the neighboring base station through an X2 interface message or an S1 interface message; and
the base station sends D2D relay capability information of the base station to the neighboring base station through the X2 interface message or the S1 interface message.

In an aspect, that the base station obtains the D2D relay capability information of the neighboring base station through the X2 interface message or the S1 interface message includes one of the following:
the base station obtains the D2D relay capability information of the neighboring base station through an X2 setup request message;
the base station obtains the D2D relay capability information of the neighboring base station through an X2 setup response message;
the base station obtains the D2D relay capability information of the neighboring base station through a base station configuration update message; and
the base station obtains the D2D relay capability information of the neighboring base station by means of an S1 TNL address discovery process.

In an aspect, that the base station selects the target base station of the handover for the D2D relay node according to the D2D relay capability information of the neighboring base station includes at least one of the following:
If the base station determines that a D2D UE is being served as the D2D relay node, it preferably selects a base station supporting D2D relay function as the target base station for the D2D UE;
If the base station determines that the D2D UE is interested in serving as the D2D relay node, it preferably selects a base station supporting D2D relay function as the target base station for the D2D UE;
If the base station determines that the D2D UE has the D2D relay capability, it preferably selects a base station supporting D2D relay function as the target base station for the D2D UE; and
If the base station determines that the D2D UE has been authorized to serve as the D2D relay node, it preferably selects a base station supporting D2D relay function as the target base station for the D2D UE.

In an embodiment, a system for switching a relay node is further provided. The system is configured to implement the above-mentioned embodiments and the preferred implementation manners; and with regard to the part that has been described, no further description is needed. As used in the following, terms "module" can achieve a combination of software and/or hardware with predetermined functions. Although the device described by the following embodiments is preferably implemented by the software, it may also be contemplated to be implemented by the hardware or the combination of the software and the hardware.

Fig. 4 is a first structure diagram of a system for switching a relay node according to an embodiment of the invention. As shown in Fig. 4, the device includes:
a first sending module 42, configured to enable that a source base station of a D2D relay node or an MME sends relevant information about the D2D relay node to a target base station; and
a configuration module 44, configured to enable that the target base station processes correspondingly according to the relevant information about the D2D relay node.

In an embodiment, the first sending module 42 includes:
a first sending unit, the MME sending the relevant information about the D2D relay node to the target base station of the D2D relay node through an S1 interface message, and the S1 interface message includes at least one of the following: a UE CONTEXT MODIFICATION REQUEST message, and a PATH SWITCH REQUEST ACKNOWLEDGE message.

In an embodiment, the configuration module 44 includes: a first configuration unit, configured to enable that the target base station determines D2D relay configuration information of the D2D relay node and sends the D2D relay configuration information to the D2D relay node via an air interface.

In an embodiment, the device further includes: an obtaining module, configured to enable that the source base station of the D2D relay node obtains the relevant information about the D2D relay node through an air interface or an X2 interface message or an S1 interface message, and the X2 interface message is an X2 interface handover request message; the S1 interface message includes at least one of the following: an INITIAL CONTEXT SETUP REQUEST message, a UE CONTEXT MODIFICATION REQUEST message, a HANDOVER REQUEST message and a PATH SWITCH REQUEST ACKNOWLEDGE message.

In an embodiment, the first sending module 42 includes: a second sending unit, configured to enable that the source base station of the D2D relay node sends the relevant information about the D2D relay node to the target base station through the X2 interface message; and a third sending unit, configured to enable that the source base station of the D2D relay node sends the relevant information about the D2D relay node to the target base station through the S1 interface message.

In an embodiment, the third sending unit is further configured to enable that the source base station sends the relevant information about the D2D relay node to the MME through the handover request message, and then, the MME sends the relevant information about the D2D relay node to the target base station through the S1 interface handover request message.

In an embodiment, the second sending unit is further configured to enable that the source base station sends the relevant information about the D2D relay node to the target base station through the X2 interface handover request message.

In an embodiment, the relevant information about the D2D relay node includes at least one of the following:
relay capability information of the D2D relay node, and the relay capability information includes at least one of the following: an indication for whether to support a D2D relay; an indication for whether to support a D2D relay from a UE to a network ; and an indication for whether to support a D2D relay from a UE to another UE;
an indication for whether being served as a D2D relay node;
an indication for whether having an interest to serve as the D2D relay node;
an indication for whether having a capability to serve as the D2D relay node;
an indication for whether authorized to serve as the D2D relay node;
a type of the D2D relay node that is being served as or has the interest to serve as or has the capability to serve as or is authorized to serve as the D2D relay node, and the type of the D2D relay node includes: a D2D relay node for a relay from the UE to the network; and a D2D relay node for a relay from a UE to another UE;
D2D resource information used by D2D discovery performed between the D2D relay node and a D2D UE served by the D2D relay node;
D2D resource information used for a D2D communication between the D2D relay node and the D2D UE served by the D2D relay node; and
power-saving configuration information of the D2D relay node.

In an embodiment, the indication for whether being served as the D2D relay node, the indication for whether having the interest to serve as the D2D relay node, the indication for whether having the capability to serve as the D2D relay node, and an indication for whether authorized to serve as the D2D relay node correspondingly include at least one of the following:
an indication for whether being served as the relay node for a relay from the UE to the network;
an indication for whether having the interest to serve as the relay node for a relay from the UE to the network;
an indication for whether having the capability to serve as the relay node for a relay from the UE to the network;
an indication for whether authorized to serve as the relay node for a relay from the UE to the network;
the indication for whether being served as the D2D relay node from a UE to another UE;
the indication for whether having the interest to serve as the D2D relay node from a UE to another UE;
the indication for whether having the capability to serve as the D2D relay node from a UE to another UE; and
an indication for whether authorized to serve as a D2D relay node for a relay from a UE to another UE.

In an embodiment, the D2D resource information includes at least one of the following: subframe pattern indication information, subframe cycle indication information, physical frequency domain resource block index indication information, resource pool information; symbol index indication information, and information about the PLMN to which the D2D resource belongs.

In an embodiment, the power-saving configuration information of the D2D relay node includes at least one of the following: an indication for enabling a relay node power-saving mechanism, a relay active state timer, a relay inactive state monitoring cycle, a monitoring frame/subframe offset and a monitoring duration.

In an embodiment, the configuration module 44 includes:
a second configuration unit, configured to enable that the target base station determines to perform a handover, the target base station supports corresponding D2D functions, and the target base station determines the D2D relay configuration information of the D2D relay node and sends the D2D relay configuration information to the D2D relay node via the source base station;
a third configuration unit, configured to enable that the target base station determines to perform the handover, the target base station not supports the corresponding D2D functions, and the target base station replies a handover response message that excludes the D2D relay configuration information of the D2D relay node to the source base station; and
a fourth configuration unit, configured to enable that the target base station determines not to perform the handover, and replies a handover failed message to the source base station.

In an aspect, the fourth configuration unit is further configured to enable that the target base station sends an S1 interface handover failed message to the MME, and the MME sends the S1 interface handover failed message to the source base station.

The fourth configuration unit is further configured to enable that the target base station sends an X2 interface handover preparation failed message to the source base station.

In an embodiment, the reasons for that the target base station determines not to perform the handover include at least one of the following:
the target base station not supports the relay function from the D2D UE to the network or from the D2D UE to another UE;
the target base station not supports the relay function from the D2D UE to the network;
the target base station not supports the relay function from the D2D UE to another UE, and the target base station not supports a D2D relay power-saving function; and
after the D2D relay node is accessed to the target base station, the target base station determines the D2D relay configuration information of the D2D relay node, and sends the D2D relay configuration information to the D2D relay node by means of the air interface.

In an embodiment, the second configuration unit is further configured to enable that, after the target base station determines to perform the handover, the target base station not supports the corresponding D2D functions, and the target base station replies the handover response message that excludes the D2D relay configuration information of the D2D relay node to the source base station, the source base station sends indication information to the D2D relay node.

The second configuration unit is further configured to enable that, after the target base station determines to perform the handover, the target base station not supports the corresponding D2D functions, and the target base station replies the handover response message that excludes the D2D relay configuration information of the D2D relay node to the source base station, the second source base station can send the indication information to the D2D relay node via an air interface handover command, and the indication information includes at least one of the following: a D2D relay connection release indication, an indication that the target base station not supports the D2D relay functions, and available D2D relay node information; the available D2D relay node information includes at least one of the following: time domain and/or frequency domain resource information used by an available D2D relay node; and identification information of the available D2D relay node.

In an embodiment, the second configuration unit is further configured to enable that, after the D2D relay node receives the indication information sent by the source base station, the D2D relay node sends the indication information to the served D2D UE, the indication information including at least one of the following: a D2D relay connection release indication, an indication that the target base station not supports the D2D relay functions, and available D2D relay node information.

In an embodiment, the D2D relay configuration information includes at least one of the following:
an indication for whether to serve as the D2D relay node;
an indication for whether to serve as the relay node for a relay from the D2D UE to the network;
an indication for whether to serve as the relay node for a relay from the D2D UE to another UE;
a type of the served D2D relay node, and the type of the D2D relay node includes: a D2D relay node for a relay from the UE to the network; and a D2D relay node for a relay from a UE to another UE;
D2D resource information that can be used by D2D discovery performed between the D2D relay node and the served D2D UE, and/or D2D resource information that can be used for a D2D communication between the D2D relay node and the served D2D UE; and
power-saving configuration information of the D2D relay node.

In an embodiment, the second configuration unit is further configured to enable that the target base station sends the D2D relay configuration information to the source base station via the S1 interface or X2 interface message, and the source base station sends the D2D relay configuration information to the D2D relay node via the air interface.

In an embodiment, the second configuration unit is further configured to enable that the target base station sends the relevant information about the D2D relay node to the MME through a handover request acknowledgement message, and then, the MME sends the relevant information about the D2D relay node to the source base station through an S1 interface handover command message.

In an embodiment, the second configuration unit is further configured to enable that the target base station sends the relevant information about the D2D relay node to the source base station through an X2 interface handover request acknowledgment message.

Fig. 5 is a second structure diagram of a system for switching a relay node. As shown in Fig. 5, the device includes: an obtaining module 52, configured to enable that a base station obtains D2D relay capability information of a neighboring base station; and a selection module 54, configured to enable that the base station selects a target base station of a handover for a D2D relay node according to the D2D relay capability information of the neighboring base station.

The system further includes: the obtaining module 52, configured to enable that the base station obtains the D2D relay capability information of the neighboring base station through an X2 interface message or an S1 interface message; and a fourth sending module, configured to enable that the base station sends D2D relay capability information of the base station to the neighboring base station through the X2 interface message or the S1 interface message.

The base station obtains the D2D relay capability information of the neighboring base station through the X2 interface message or the S1 interface message includes one of the following:
the base station obtains the D2D relay capability information of the neighboring base station through an X2 setup request message;
the base station obtains the D2D relay capability information of the neighboring base station through an X2 setup response message;
the base station obtains the D2D relay capability information of the neighboring base station through a base station configuration update message; and
the base station obtains the D2D relay capability information of the neighboring base station through an S1 interface TNL address discovery process.

The selection module 54 is further configured to enable that if the base station determines that a D2D UE is being served as the D2D relay node, it preferably selects a base station supporting D2D relay function as the target base station for the D2D UE.

The selection module 54 is further configured to enable that if the base station determines that the D2D UE is interested in serving as the D2D relay node, it preferably selects a base station supporting D2D relay function as the target base station for the D2D UE.

The selection module 54 is further configured to enable that if the base station determines that the D2D UE has the D2D relay capability, it preferably selects a base station supporting D2D relay function as the target base station for the D2D UE.

The selection module 54 is further configured to enable that if the base station determines that the D2D UE has been authorized to serve as the D2D relay node, it preferably selects a base station supporting D2D relay function as the target base station for the D2D UE.

The invention will be described below in detail with reference to the preferred embodiments and implementation manners.

### Embodiment one

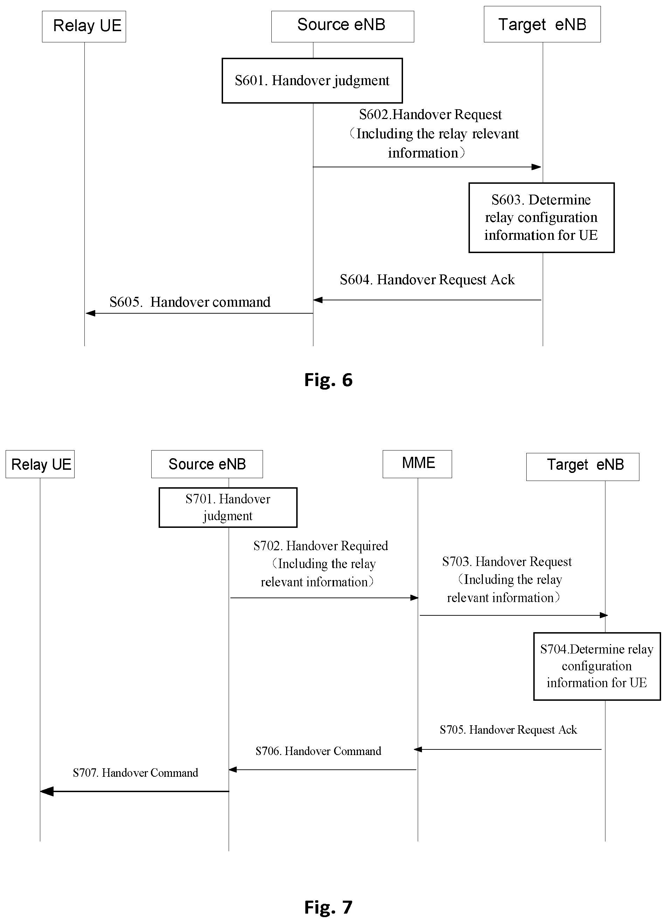

The preferred embodiment is to describe a flowchart of a method that a relay UE has X2 handover. Fig. 6 is a flowchart of a method that a relay UE has an X2 handover according to a preferred embodiment of the invention. As shown in Fig. 6, the method of the embodiment includes the following steps.

In step S601, a source base station of a relay UE judges that there is a need to perform a cell handover for the relay UE after receiving a measurement report of the relay UE. Alternatively, before judging the handover, the source base station obtains relay capability information of a neighboring base station through an X2 interface message (for example, an X2 setup request/response message and a base station configuration update message), that is, whether to support D2D relay functions. The source base station also may send own relay capability information to the neighboring base station by means of the X2 setup request/response message or the base station configuration update message. If the source base station determines that the relay UE is being served as the relay UE or is interested in serving as the relay UE or has D2D relay capability, it may tend to select a target base station supporting the D2D relay functions for the UE. The source base station may obtain whether the relay UE is being served as the relay UE or is interested in serving as the relay UE or has the D2D relay functions by means of a reporting of the relay UE or from an MME.

In step S602, the source base station judges that an X2 handover condition is met and sends an X2 interface handover request message to the target base station. The X2 interface handover request message includes relevant information about a D2D relay, namely relay relevant information of the relay UE. Specifically, the relevant information about the D2D relay node includes one or more of the following information.
1) The relay capability information of the D2D relay node, the relay capability information at least including one of the following: an indication for whether to support a D2D relay; an indication for whether to support a D2D relay from a UE to a network; and an indication for whether to support a D2D relay from a UE to another UE.
2) Whether being served as/having an interest to serve as/may serve as a D2D relay node indication, specifically, whether being served as/having the interest to serve as/may serve as the D2D relay node indication at least including one of the following: whether being served as/having the interest to serve as/may serve as the D2D relay node indication from the UE to the network or the UE to the UE; whether being served as/having the interest to serve as/may serve as the D2D relay indication from the UE to the network; and whether being served as/having the interest to serve as/may serve as the D2D relay indication from a UE to another UE.
3) The type of the D2D relay node that is being served as/has the interest to serve as/may be served as/is authorized to serve as the D2D relay node, the type of the D2D relay node including: a D2D relay node for a relay from the UE to the network; and a D2D relay node for a relay from a UE to another UE.
4) The D2D resource information used by D2D discovery and/or D2D communication performed between the D2D relay node and the served D2D UE, specifically, the D2D resource information including one or a combination of the following: subframe pattern indication information, subframe cycle indication information, physical frequency domain resource block index indication information, resource pool information; symbol index indication information, and information about the PLMN to which the D2D resource belongs.
5) the power-saving configuration information of the D2D relay node, specifically, the power-saving configuration information of the D2D relay node including one or a combination of the following: an indication for enabling a relay node power-saving mechanism, a relay active state timer, a relay inactive state monitoring cycle, a monitoring frame/subframe offset and a monitoring duration.

In step S603, the target base station performs an admission control for the relay UE after receiving the handover request message. Alternatively, the target base station may determine relay configuration information for the relay UE according to the relevant information about the D2D relay node in the handover request message. Specifically, the D2D relay configuration information includes one or a combination of the following:
1) an indication for whether to serve as the D2D relay node;
2) type of the served D2D relay node, the type of the D2D relay node including a D2D relay node for a relay from the UE to the network, and a D2D relay node for a relay from a UE to another UE;
3) D2D resource information used by D2D discovery and/or D2D communication performed between the D2D relay node and the served D2D UE, specifically, the D2D resource information including one or a combination of the following: subframe pattern indication information, subframe cycle indication information, physical frequency domain resource block index indication information, resource pool information, symbol index indication information; and information about the PLMN to which the D2D resource belongs; and
4) power-saving configuration information of the D2D relay node, specifically, the power-saving configuration information of the D2D relay node including one or a combination of the following: an indication for enabling a relay node power-saving mechanism, a relay active state timer, a relay inactive state monitoring cycle, a monitoring frame/subframe offset and a monitoring duration.

In step S604, the target base station sends a handover request acknowledgement message to the source base station. Alternatively, the handover request acknowledgement message includes the D2D relay configuration information determined for the relay UE by the target base station.

In step S605, the source base station sends a handover command received from the target base station to the UE by means of a Radio Resource Control (RRC) reconfiguration message, and indicates the UE to access to a target cell. Alternatively, the handover command includes the D2D relay configuration information configured for the relay UE by the target base station.

It is to be noted that the target base station may not perform the D2D relay configuration for the relay UE in a switching process, but determines the relay configuration information for the UE after the switching is finished and the relay UE is accessed to the target base station, and sends the relay configuration information to the relay UE by means of the air interface.

### Embodiment two

The embodiment is to describe a flowchart of a method that a relay UE has S1 handover. Fig. 7 is a flowchart of a method that a relay UE has an S1 handover according to a preferred embodiment of the invention. As shown in Fig. 7, the method of the embodiment includes the following steps:
In step S701, a source base station of a relay UE judges that there is a need to perform a cell handover for the relay UE after receiving a measurement report of the relay UE. Alternatively, before judging the handover, the source base station obtains relay capability information of a neighboring base station through an X2 interface message (for example, an X2 setup request/response message and a base station configuration update message), that is, whether to support D2D relay functions. The source base station also may send own relay capability information to the neighboring base station by means of the X2 setup request/response message or the base station configuration update message. If the source base station determines that the relay UE is being served as the relay UE or is interested in serving as the relay UE or has D2D relay capability, it may tend to select a target base station supporting the D2D relay functions for the UE. The source base station may obtain whether the relay UE is being served as the relay UE or is interested in serving as the relay UE or has the D2D relay functions by means of a reporting of the relay UE or from an MME.

In step S702, the source base station judges that there is a need to initiate the S1 handover and sends an S1 interface handover request message to the MME. The S1 interface handover request message includes relevant information about a D2D relay, namely relay relevant information of the relay UE. Specifically, the relevant information about the D2D relay node includes one or a combination of the following:
1) the relay capability information of the D2D relay node, the relay capability information at least including one of the following: an indication for whether to support a D2D relay; an indication for whether to support a D2D relay from a UE to a network; and an indication for whether to support a D2D relay from a UE to another UE;
2) whether being served as/having an interest to serve as/may serve as a D2D relay node indication, specifically, whether being served as/having the interest to serve as/may serve as the D2D relay node indication at least including one of the following: whether being served as/having the interest to serve as/may serve as the D2D relay node indication from the UE to the network or the UE to the UE; whether being served as/having the interest to serve as/may serve as the D2D relay indication from the UE to the network; and whether being served as/having the interest to serve as/may serve as the D2D relay indication from a UE to another UE;
3) the type that is being served as/has the interest to serve as/may be served as/is authorized to serve as the D2D relay node, the type of the D2D relay node including: a D2D relay node for a relay from the UE to the network; and a D2D relay node for a relay from a UE to another UE;
4) D2D resource information used by D2D discovery and/or D2D communication performed between the D2D relay node and the served D2D UE, specifically, the D2D resource information including one or a combination of the following: subframe pattern indication information; subframe cycle indication information; physical frequency domain resource block index indication information; resource pool information; symbol index indication information; and information about the PLMN to which the D2D resource belongs; and
5) power-saving configuration information of the D2D relay node, specifically, the power-saving configuration information of the D2D relay node including one or a combination of the following: an indication for enabling a relay node power-saving mechanism, a relay active state timer, a relay inactive state monitoring cycle, a monitoring frame/subframe offset and a monitoring duration.

In step S703, the MME sends the S1 interface handover request message to the target base station, the S1 interface handover request message including the D2D relay relevant information sent by the source base station.

In step S704, the target base station performs an admission control for the relay UE after receiving the S1 handover request message. Alternatively, the target base station may determine relay configuration information for the relay UE according to the relevant information about the D2D relay node in the handover request message. Specifically, the D2D relay configuration information includes one or a combination of the following:
1) an indication for whether to serve as the D2D relay node;
2) type of the served D2D relay node, the type of the D2D relay node including a D2D relay node for a relay from the UE to the network, and a D2D relay node for a relay from a UE to another UE;
3) D2D resource information used by D2D discovery and/or D2D communication performed between the D2D relay node and the served D2D UE, specifically, the D2D resource information including one or a combination of the following: subframe pattern indication information, subframe cycle indication information, physical frequency domain resource block index indication information, resource pool information, symbol index indication information; and information about the PLMN to which the D2D resource belongs; and
4) power-saving configuration information of the D2D relay node, specifically, the power-saving configuration information of the D2D relay node including one or a combination of the following: an indication for enabling a relay node power-saving mechanism, a relay active state timer, a relay inactive state monitoring cycle, a monitoring frame/subframe offset and a monitoring duration.

In step S705, the target base station replies an S1 handover request acknowledge message to the MME. Alternatively, the S1 handover request acknowledgement message includes the D2D relay configuration information determined for the relay UE by the target base station.

In step S706, the MME sends a signaling handover message to the source base station. The signaling handover message may include the D2D relay configuration information configured for the relay UE by the target base station.

In step S707, the source base station sends a handover command received from the MME to the UE by means of an RRC reconfiguration message, and indicates the UE to access to a target cell. Alternatively, the handover command includes the D2D relay configuration information configured for the relay UE by the target base station.

It is to be noted that the target base station may not perform the D2D relay configuration for the relay UE in a switching process, but determines the relay configuration information for the UE after the switching is finished and the relay UE is accessed to the target base station, and sends the relay configuration information to the relay UE by means of the air interface.

Through description of the foregoing implementation manners, a person skilled in the art can clearly learn that each implementation manner can be implemented by means of software in combination with a necessary universal hardware platform, and certainly, may be also implemented by using hardware. However, in many cases, the former is a preferred implementation manner. Based on such an understanding, the technical solution of the invention substantially or a part with contributions to the related art may be embodied in form of a software product, and the computer software product is stored in a storage medium (for example, an ROM/RAM, a magnetic disk, or a compact disc), including several instructions for enabling a terminal device (which may be a mobile phone, a computer, a sever, or a network device, and the like) to perform the method In an embodiments of the invention.

In an embodiment, the preceding storage medium may include but not limited to: various media capable of storing program codes such as a U disk, a Read-Only Memory (ROM), a Random Access Memory (RAM), a mobile hard disk, a magnetic disk or a compact disc.

In an embodiment, a processor performs the system for switching a relay node according to the program codes stored in the storage medium.

Apparently, those skilled in the art should understand that various modules or steps of the invention described above may be implemented by general-purpose computing devices that may be centralized on a single computing device or distributed over a network consisting of a plurality of computing devices. Alternatively, the modules or steps may be implemented by program codes executable by the computing devices such that they may be stored in storage devices and performed by the computing devices. Moreover, in some cases, the steps shown or described may be performed in an order different from that shown herein. Or the modules or steps can be made separately into individual integrated circuit modules, or some of them can be made into a single integrated circuit module. Thus, the invention is not limited to any particular combination of hardware and software.

## Claims

1. A method for switching a relay node, comprising:
sending, by a source base station of a Device-to-Device, D2D, relay node or a Mobile Management Entity, MME, relevant information about the D2D relay node to a target base station; and
performing, by the target base station, a corresponding process according to the relevant information about the D2D relay node;
wherein the step of performing, by the target base station, a corresponding process according to the relevant information about the D2D relay node comprises: determining, by the target base station, D2D relay configuration information for the D2D relay node according to the relevant information about the D2D relay node and sending a handover request acknowledgement message including the D2D relay configuration information to the source base station;
wherein the method further comprises: sending, by the source base station, a handover command received from the target base station to the D2D relay node by means of a Radio Resource Control, RRC, reconfiguration message, wherein the handover command includes the D2D relay configuration information configured for the D2D relay node by the target base station;
wherein the relevant information about the D2D relay node comprises at least one of the following information:
relay capability information of the D2D relay node, wherein the relay capability information comprises at least one of the following: an indication for whether to support a D2D relay; an indication for whether to support a D2D relay from a UE to a network; and an indication for whether to support a D2D relay from a UE to another UE;
an indication for whether being served as a D2D relay node;
an indication for whether having an interest to serve as the D2D relay node;
an indication for whether having a capability to serve as the D2D relay node;
an indication for whether authorized to serve as the D2D relay node;
a type of the D2D relay node that is being served as or has the interest to serve as or has the capability to serve as or is authorized to serve as the D2D relay node, wherein the type of the D2D relay node comprises: a D2D relay node for a relay from the UE to the network, and a D2D relay node for a relay from a UE to another UE;
power-saving configuration information of the D2D relay node.

2. The method as claimed in claim 1, wherein the step of sending, by the MME, the relevant information about the D2D relay node to the target base station comprises:
sending, by the MME, the relevant information about the D2D relay node to the target base station of the D2D relay node through an S1 interface message, wherein the S1 interface message comprises at least one of the following messages: a UE CONTEXT MODIFICATION REQUEST message, and a PATH SWITCH REQUEST ACKNOWLEDGE message.

3. The method as claimed in claim 1, wherein the step of performing a corresponding process according to the relevant information about the D2D relay node after receiving the relevant information about the D2D relay node sent by the MME of the D2D relay node comprises:
determining, by the target base station, D2D relay configuration information of the D2D relay node, and sending the D2D relay configuration information to the D2D relay node via an air interface.

4. The method as claimed in claim 1, the method further comprising:
before sending the relevant information about the D2D relay node to the target base station, obtaining, by the source base station of the D2D relay node, the relevant information about the D2D relay node through an air interface or an X2 interface message or an S 1 interface message, wherein the X2 interface message is an X2 interface handover request message, and the S1 interface message comprises at least one of the following messages: an INITIAL CONTEXT SETUP REQUEST message, a UE CONTEXT MODIFICATION REQUEST message, a HANDOVER REQUEST message and a PATH SWITCH REQUEST ACKNOWLEDGE message.

5. The method as claimed in claim 1, wherein the source base station of the D2D relay node sends the relevant information about the D2D relay node to the target base station in one of the following ways:
sending, by the source base station of the D2D relay node, the relevant information about the D2D relay node to the target base station through the X2 interface message; and
sending, by the source base station of the D2D relay node, the relevant information about the D2D relay node to the target base station through the S1 interface message;
wherein the step of sending the relevant information about the D2D relay node to the target base station through the S1 interface message comprises:
sending, by the source base station, the relevant information about the D2D relay node to the MME through the handover request message; and then, sending, by the MME, the relevant information about the D2D relay node to the target base station through the S1 interface handover request message;
wherein the step of sending the relevant information about the D2D relay node to the target base station through the X2 interface message comprises:
sending, by the source base station, the relevant information about the D2D relay node to the target base station through the X2 interface handover request message.

6. The method as claimed in any one of claims 1-5, wherein the relevant information about the D2D relay node further comprises at least one of the following information:
D2D resource information used by D2D discovery performed between the D2D relay node and a D2D UE served by the D2D relay node;
D2D resource information used for a D2D communication between the D2D relay node and the D2D UE served by the D2D relay node;
wherein the D2D resource information comprises at least one of the following information:
subframe pattern indication information, subframe cycle indication information, physical frequency domain resource block index indication information, resource pool information, symbol index indication information, and information about a Public Land Mobile Network, PLMN, to which the D2D resource belongs;
wherein the power-saving configuration information of the D2D relay node comprises at least one of the following information:
an indication for enabling a relay node power-saving mechanism, a relay active state timer, a relay inactive state monitoring cycle, a monitoring frame/subframe offset and a monitoring duration.

7. The method as claimed in claim 1, wherein the indication for whether being served as the D2D relay node, the indication for whether having the interest to serve as the D2D relay node, the indication for whether having the capability to serve as the D2D relay node, and the indication for whether authorized to serve as the D2D relay node correspondingly comprise at least one of the following:
an indication for whether being served as the relay node for a relay from the UE to the network;
an indication for whether having the interest to serve as the relay node for a relay from the UE to the network;
an indication for whether having the capability to serve as the relay node for a relay from the UE to the network;
an indication for whether authorized to serve as the relay node for a relay from the UE to the network;
the indication for whether being served as the D2D relay node from a UE to another UE;
the indication for whether having the interest to serve as the D2D relay node from a UE to another UE;
the indication for whether having the capability to serve as the D2D relay node from a UE to another UE; and
an indication for whether authorized to serve as a D2D relay node for a relay from a UE to another UE.

8. The method as claimed in claim 1, wherein the step of performing a corresponding process according to the relevant information about the D2D relay node further comprises one of the following:
determining, by the target base station, to perform a handover, wherein the target base station supports a corresponding D2D function, and determining, by the target base station, the D2D relay configuration information of the D2D relay node and sending the D2D relay configuration information to the D2D relay node via the source base station;
determining, by the target base station, to perform the handover, wherein the target base station not supports the corresponding D2D function, and replying, by the target base station, a handover response message that excludes the D2D relay configuration information of the D2D relay node to the source base station; and
determining, by the target base station, not to perform the handover and replying a handover failed message to the source base station.

9. The method as claimed in claim 8, wherein the reasons for determining not to perform the handover by the target base station comprise at least one of the following:
the target base station not supports the relay function from the D2D UE to the network or from the D2D UE to another UE;
the target base station not supports the relay function from the D2D UE to the network;
the target base station not supports the relay function from the D2D UE to another UE;
and
the target base station not supports a D2D relay power-saving function.

10. The method as claimed in claim 8, wherein after determining to perform the handover by the target base station, not supporting the corresponding D2D functions by the target base station, and replying, by the target base station, the handover response message that excludes the D2D relay configuration information of the D2D relay node to the source base station, the method further comprises:
sending, by the source base station, indication information to the D2D relay node;
the source base station send the indication information to the D2D relay node via an air interface handover command, wherein the indication information comprises at least one of the following: a D2D relay connection release indication, an indication that the target base station not supports the D2D relay functions, and available D2D relay node information; the available D2D relay node information comprises at least one of the following: time domain and/or frequency domain resource information used by an available D2D relay node, identification information of the available D2D relay node.

11. The method as claimed in claim 10, the method further comprising:
after receiving the indication information sent by the source base station, sending, by the D2D relay node, the indication information to the served D2D UE, wherein the indication information comprising at least one of the following: a D2D relay connection release indication, an indication that the target base station not supports the D2D relay functions, and available D2D relay node information.

12. The method as claimed in claim 8, wherein the D2D relay configuration information comprises at least one of the following:
an indication for whether to serve as the D2D relay node;
an indication for whether to serve as the relay node for a relay from the D2D UE to the network;
an indication for whether to serve as the relay node for a relay from the D2D UE to another UE;
a type of the served D2D relay node, wherein the type of the D2D relay node comprises: a D2D relay node for a relay from the UE to the network; and a D2D relay node for a relay from a UE to another UE;
D2D resource information that can be used by D2D discovery performed between the D2D relay node and the served D2D UE, and/or D2D resource information that can be used for a D2D communication between the D2D relay node and the served D2D UE; and
power-saving configuration information of the D2D relay node.

13. The method as claimed in claim 8, wherein the step of determining the D2D relay configuration information of the D2D relay node and sending the D2D relay configuration information to the D2D relay node via the source base station comprises:
sending, by the target base station, the D2D relay configuration information to the source base station via the S1 interface or X2 interface message, and sending, by the source base station, the D2D relay configuration information to the D2D relay node via the air interface;
wherein the step of sending the D2D relay configuration information to the source base station via the S1 interface message comprises:
sending, by the target base station, the relevant information about the D2D relay node to the MME through a handover request acknowledgement message, and sending, by the MME, the relevant information about the D2D relay node to the source base station through an S1 interface handover command message;
wherein the step of sending the D2D relay configuration information to the source base station via the X2 interface message comprises:
sending, by the target base station, the relevant information about the D2D relay node to the source base station through an X2 interface handover request acknowledgment message.

14. A system for switching a relay node, comprising:
a first sending module, configured to enable that a source base station of a Device-to-Device, D2D, relay node or a Mobile Management Entity, MME, sends relevant information about the D2D relay node to a target base station; and
a configuration module, configured to enable that the target base station processes correspondingly according to the relevant information about the D2D relay node;
wherein the target base station is configured to determine D2D relay configuration information for the D2D relay node according to the relevant information about the D2D relay node and send a handover request acknowledgement message including the D2D relay configuration information to the source base station;
wherein the source base station is further configured to send a handover command received from the target base station to the D2D relay node by means of a Radio Resource Control, RRC, reconfiguration message, wherein the handover command includes the D2D relay configuration information configured for the D2D relay node by the target base station;
wherein the relevant information about the D2D relay node comprises at least one of the following information:
relay capability information of the D2D relay node, wherein the relay capability information comprises at least one of the following: an indication for whether to support a D2D relay; an indication for whether to support a D2D relay from a UE to a network; and an indication for whether to support a D2D relay from a UE to another UE;
an indication for whether being served as a D2D relay node;
an indication for whether having an interest to serve as the D2D relay node;
an indication for whether having a capability to serve as the D2D relay node;
an indication for whether authorized to serve as the D2D relay node;
a type of the D2D relay node that is being served as or has the interest to serve as or has the capability to serve as or is authorized to serve as the D2D relay node, wherein the type of the D2D relay node comprises: a D2D relay node for a relay from the UE to the network, and a D2D relay node for a relay from a UE to another UE;
power-saving configuration information of the D2D relay node.

## Patentansprüche

1. Verfahren zum Umschalten eines Relaisknotens, das Folgendes umfasst:
Senden, durch eine Quellbasisstation eines Vorrichtung-zu-Vorrichtung(Device-to-Device - D2D)-Relaisknotens oder eine Mobilverwaltungsinstanz (Mobile Management Entity - MME), von relevanten Informationen über den D2D-Relaisknoten an eine Zielbasisstation; und
Durchführen, durch die Zielbasisstation, eines entsprechenden Vorgangs gemäß den relevanten Informationen über den D2D-Relaisknoten;
wobei der Schritt des Durchführens, durch die Zielbasisstation, eines entsprechenden Vorgangs gemäß den relevanten Informationen über den D2D-Relaisknoten Folgendes umfasst: Bestimmen, durch die Zielbasisstation, von D2D-Relaiskonfigurationsinformationen für den D2D-Relaisknoten gemäß den relevanten Informationen über den D2D-Relaisknoten und Senden einer Übergabeanforderungsbestätigungsnachricht, die die D2D-Relaiskonfigurationsinformationen einschließt, an die Quellbasisstation;
wobei das Verfahren ferner Folgendes umfasst: Senden, durch die Quellbasisstation, eines Übergabebefehls, der von der Zielbasisstation empfangen wird, an den D2D-Relaisknoten mittels einer Funkressourcensteuerungs(Radio Resource Control - RRC)-Rekonfigurationsnachricht, wobei der Übergabebefehl die D2D-Relaiskonfigurationsinformationen einschließt, die für den D2D-Relaisknoten durch die Zielbasisstation konfiguriert sind;
wobei die relevanten Informationen über den D2D-Relaisknoten folgende Informationen umfassen:
Relaisfähigkeitsinformationen des D2D-Relaisknotens, wobei die Relaisfähigkeitsinformationen Folgendes umfassen: eine Angabe, ob ein D2D-Relais unterstützt werden soll; eine Angabe, ob ein D2D-Relais von einer UE zu einem Netzwerk unterstützt werden soll; und/oder eine Angabe, ob ein D2D-Relais von einer UE zu einer anderen UE unterstützt werden soll;
eine Angabe, ob als ein D2D-Relaisknoten gedient wird;
eine Angabe, ob ein Interesse besteht, als der D2D-Relaisknoten zu dienen;
eine Angabe, ob die Fähigkeit besteht, als der D2D-Relaisknoten zu dienen;
eine Angabe, ob autorisiert ist, als der D2D-Relaisknoten zu dienen;
einen Typ des D2D-Relaisknotens, der als der D2D-Relaisknoten dient oder das Interesse besteht, als dieser zu dienen oder die Fähigkeit besteht, als dieser zu dienen, oder der autorisiert ist, als dieser zu dienen, wobei der Typ des D2D-Relaisknotens Folgendes umfasst: einen D2D-Relaisknoten für ein Relais von der UE zu dem Netzwerk und einen D2D-Relaisknoten für ein Relais von einer UE zu einer anderen UE; und/oder
Informationen zu einer energiesparenden Konfiguration des D2D-Relaisknotens.

2. Verfahren nach Anspruch 1, wobei der Schritt des Sendens, durch die MME, der relevanten Informationen über den D2D-Relaisknoten an die Zielbasisstation Folgendes umfasst:
Senden, durch die MME, der relevanten Informationen über den D2D-Relaisknoten an die Zielbasisstation des D2D-Relaisknotens durch eine S1-Schnittstellennachricht, wobei die S1-Schnittstellennachricht folgende Nachrichten umfasst: eine UE-KONTEXT-MODIFIKATIONSANFORDERUNGS-Nachricht und/oder eine PFADUMSCHALTANFORDERUNGSBESTÄTIGUNGS-Nachricht.

3. Verfahren nach Anspruch 1, wobei der Schritt des Durchführens eines entsprechenden Vorgangs gemäß den relevanten Informationen über den D2D-Relaisknoten nach dem Empfangen der relevanten Informationen über den D2D-Relaisknoten, die durch die MME des D2D-Relaisknotens gesendet werden, Folgendes umfasst:
Bestimmen, durch die Zielbasisstation, von D2D-Relaiskonfigurationsinformationen des D2D-Relaisknotens und Senden der D2D-Relaiskonfigurationsinformationen an den D2D-Relaisknoten über eine Luftschnittstelle.

4. Verfahren nach Anspruch 1, wobei das Verfahren ferner Folgendes umfasst:
vor dem Senden der relevanten Informationen über den D2D-Relaisknoten an die Zielbasisstation, Erhalten, durch die Quellbasisstation des D2D-Relaisknotens, der relevanten Informationen über den D2D-Relaisknoten durch eine Luftschnittstelle oder eine X2-Schnittstellennachricht oder eine S1-Schnittstellennachricht, wobei die X2-Schnittstellennachricht eine X2-Schnittstellenübergabeanforderungsnachricht ist und die S1-Schnittstellennachricht folgende Nachrichten umfasst: eine INITIALISIERUNGSKONTEXTEINSTELLUNGSANFORDERUNGS-Nachricht, eine UE-KONTEXT-MODIFIKATIONSANFORDERUNGS-Nachricht, eine ÜBERGABEANFORDERUNGS-Nachricht und/oder eine PFADUMSCHALTANFORDERUNGSBESTÄTIGUNGS-Nachricht.

5. Verfahren nach Anspruch 1, wobei die Quellbasisstation des D2D-Relaisknotens die relevanten Informationen über den D2D-Relaisknoten auf folgende Weise an die ZielBasisstation sendet:
Senden, durch die Quellbasisstation des D2D-Relaisknotens, der relevanten Informationen über den D2D-Relaisknoten an die Zielbasisstation durch die X2-Schnittstellennachricht; oder
Senden, durch die Quellbasisstation des D2D-Relaisknotens, der relevanten Informationen über den D2D-Relaisknoten an die Zielbasisstation durch die S1-Schnittstellennachricht;
wobei der Schritt des Sendens der relevanten Informationen über den D2D-Relaisknoten an die Zielbasisstation durch die S1-Schnittstellennachricht Folgendes umfasst:
Senden, durch die Quellbasisstation, der relevanten Informationen über den D2D-Relaisknoten an die MME durch die Übergabeanforderungsnachricht; und dann Senden, durch die MME, der relevanten Informationen über den D2D-Relaisknoten an die Zielbasisstation durch die S1-Schnittstellenübergabeanforderungsnachricht;
wobei der Schritt des Sendens der relevanten Informationen über den D2D-Relaisknoten an die Zielbasisstation durch die X2-Schnittstellennachricht Folgendes umfasst:
Senden, durch die Quellbasisstation, der relevanten Informationen über den D2D-Relaisknoten an die Zielbasisstation durch die X2-Schnittstellenübergabeanforderungsnachricht.

6. Verfahren nach einem der Ansprüche 1-5, wobei die relevanten Informationen über den D2D-Relaisknoten ferner folgende Informationen umfassen:
D2D-Ressourceninformationen, die durch eine D2D-Erkennung verwendet werden, die zwischen dem D2D-Relaisknoten und einer D2D-UE, die durch den D2D-Relaisknoten bedient wird, durchgeführt wird; und/oder
D2D-Ressourceninformationen, die für eine D2D-Kommunikation zwischen dem D2D-Relaisknoten und der D2D-UE, die durch den D2D-Relaisknoten bedient wird, verwendet werden;
wobei die D2D-Ressourceninformationen folgende Informationen umfassen: Unterrahmenmusterangabeinformationen,
Unterrahmenzyklusangabeinformationen, Ressourcenblockindexangabeinformationen des physikalischen Frequenzbereichs, Ressourcenpoolinformationen, Symbolindexangabeinformationen und/oder Informationen über ein öffentliches Mobilkommunikationsnetz (Public Land Mobile Network - PLMN), zu dem die D2D-Ressource gehört;
wobei die Informationen zu einer energiesparenden Konfiguration des D2D-Relaisknotens folgende Informationen umfassen:
eine Angabe zum Aktivieren eines Energiesparmechanismus für einen Relaisknoten, einen Zeitgeber für einen aktiven Relaiszustand, einen Überwachungszyklus für einen inaktiven Relaiszustand, einen Überwachungsrahmen/Unterrahmen-Versatz und/oder eine Überwachungsdauer.

7. Verfahren nach Anspruch 1, wobei die Angabe, ob als der D2D-Relaisknoten gedient wird, die Angabe, ob das Interesse besteht, als der D2D-Relaisknoten zu dienen, die Angabe, ob die Fähigkeit besteht, als der D2D-Relaisknoten zu dienen, und die Angabe, ob autorisiert ist, als der D2D-Relaisknoten zu dienen, entsprechend Folgendes umfassen:
eine Angabe, ob als der Relaisknoten für ein Relais von der UE zu dem Netzwerk gedient wird;
eine Angabe, ob das Interesse besteht, als der Relaisknoten für ein Relais von der UE zu dem Netzwerk zu dienen;
eine Angabe, ob die Fähigkeit besteht, als der Relaisknoten für ein Relais von der UE zu dem Netzwerk zu dienen;
eine Angabe, ob autorisiert ist, als der Relaisknoten für ein Relais von der UE zu dem Netzwerk zu dienen;
die Angabe, ob als der D2D-Relaisknoten von einer UE zu einer anderen UE gedient wird;
die Angabe, ob das Interesse besteht, als der D2D-Relaisknoten von einer UE zu einer anderen UE zu dienen;
die Angabe, ob die Fähigkeit besteht, als der D2D-Relaisknoten von einer UE zu einer anderen UE zu dienen; und/oder
eine Angabe, ob autorisiert ist, als ein D2D-Relaisknoten für ein Relais von einer UE zu einer anderen UE zu dienen.

8. Verfahren nach Anspruch 1, wobei der Schritt des Durchführens eines entsprechenden Vorgangs gemäß den relevanten Informationen über den D2D-Relaisknoten ferner Folgendes umfasst:
Bestimmen, durch die Zielbasisstation, eine Übergabe durchzuführen, wobei die Zielbasisstation eine entsprechende D2D-Funktion unterstützt, und Bestimmen, durch die Zielbasisstation, der D2D-Relaiskonfigurationsinformationen des D2D-Relaisknotens und Senden der D2D-Relaiskonfigurationsinformationen an den D2D-Relaisknoten über die Quellbasisstation;
Bestimmen, durch die Zielbasisstation, die Übergabe durchzuführen, wobei die Zielbasisstation die entsprechende D2D-Funktion nicht unterstützt, und Rücksenden, durch die Zielbasisstation, einer Übergabeantwortnachricht, die die D2D-Relaiskonfigurationsinformationen des D2D-Relaisknotens ausschließt, an die Quellbasisstation; oder
Bestimmen, durch die Zielbasisstation, die Übergabe nicht durchzuführen, und Rücksenden einer Nachricht über die fehlgeschlagene Übergabe an die Quellbasisstation.

9. Verfahren nach Anspruch 8, wobei die Gründe für das Bestimmen, die Übergabe durch die Zielbasisstation nicht durchzuführen, Folgendes umfassen:
die Zielbasisstation unterstützt nicht die Relaisfunktion von der D2D-UE zu dem Netzwerk oder von der D2D-UE zu einer anderen UE;
die Zielbasisstation unterstützt nicht die Relaisfunktion von der D2D-UE zu dem Netzwerk;
die Zielbasisstation unterstützt nicht die Relaisfunktion von der D2D-UE zu einer anderen UE; und/oder
die Zielbasisstation unterstützt keine D2D-Relais-Energiesparfunktion.

10. Verfahren nach Anspruch 8, wobei nach dem Bestimmen, die Übergabe durch die Zielbasisstation durchzuführen, dem Nichtunterstützen der entsprechenden D2D-Funktionen durch die Zielbasisstation und dem Rücksenden, durch die Zielbasisstation, der Übergabeantwortnachricht, die die D2D-Relaiskonfigurationsinformationen des D2D-Relaisknotens ausschließt, an die Quellbasisstation, das Verfahren ferner Folgendes umfasst:
Senden, durch die Quellbasisstation, von Angabeinformationen an den D2D-Relaisknoten;
wobei die Quellbasisstation die Angabeinformationen über einen Luftschnittstellenübergabebefehl an den D2D-Relaisknoten sendet, wobei die Angabeinformationen Folgendes umfassen: eine D2D-Relaisverbindungsfreigabeangabe, eine Angabe, dass die Zielbasisstation die D2D-Relaisfunktionen nicht unterstützt und/oder Informationen über verfügbare D2D-Relaisknoten; wobei die Informationen über verfügbare D2D-Relaisknoten Folgendes umfassen: Zeitbereichs- und/oder Frequenzbereich-Ressourceninformationen, die durch einen verfügbaren D2D-Relaisknoten verwendet werden und/oder Identifikationsinformationen des verfügbaren D2D-Relaisknotens.

11. Verfahren nach Anspruch 10, wobei das Verfahren ferner Folgendes umfasst:
nach dem Empfangen der durch die Quellbasisstation gesendeten Angabeinformationen, Senden, durch den D2D-Relaisknoten, der Angabeinformationen an die bediente D2D-UE, wobei die Angabeinformationen Folgendes umfassen: eine D2D-Relaisverbindungsfreigabeangabe, eine Angabe, dass die Zielbasisstation die D2D-Relaisfunktionen nicht unterstützt und/oder Informationen über verfügbare D2D-Relaisknoten.

12. Verfahren nach Anspruch 8, wobei die D2D-Relaiskonfigurationsinformationen Folgendes umfassen:
eine Angabe, ob als der D2D-Relaisknoten zu dienen ist;
eine Angabe, ob als der Relaisknoten für ein Relais von der D2D-UE zu dem Netzwerk zu dienen ist;
eine Angabe, ob als der Relaisknoten für ein Relais von der D2D-UE zu einer anderen UE zu dienen ist;
einen Typ des bedienten D2D-Relaisknotens, wobei der Typ des D2D-Relaisknotens Folgendes umfasst:
einen D2D-Relaisknoten für ein Relais von der UE zu dem Netzwerk; und einen D2D-Relaisknoten für ein Relais von einer UE zu einer anderen UE;
D2D-Ressourceninformationen, die durch die D2D-Erkennung verwendet werden können, die zwischen dem D2D-Relaisknoten und der bedienten D2D-UE durchgeführt wird, und/oder D2D-Ressourceninformationen, die für eine D2D-Kommunikation zwischen dem D2D-Relaisknoten und der bedienten D2D-UE verwendet werden können; und/oder
Informationen zu einer energiesparenden Konfiguration des D2D-Relaisknotens.

13. Verfahren nach Anspruch 8, wobei der Schritt des Bestimmens der D2D-Relaiskonfigurationsinformationen des D2D-Relaisknotens und des Sendens der D2D-Relaiskonfigurationsinformationen an den D2D-Relaisknoten über die Quellbasisstation Folgendes umfasst:
Senden, durch die Zielbasisstation, der D2D-Relaiskonfigurationsinformationen über die S1-Schnittstellen- oder die X2-Schnittstellennachricht an die Quellbasisstation, und Senden, durch die Quellbasisstation, der D2D-Relaiskonfigurationsinformationen über die Luftschnittstelle an den D2D-Relaisknoten;
wobei der Schritt des Sendens der D2D-Relaiskonfigurationsinformationen an die Quellbasisstation über die S1-Schnittstellennachricht Folgendes umfasst:
Senden, durch die Zielbasisstation, der relevanten Informationen über den D2D-Relaisknoten an die MME durch eine Übergabeanforderungsbestätigungsnachricht und Senden, durch die MME, der relevanten Informationen über den D2D-Relaisknoten an die Quellbasisstation durch eine S1-Schnittstellenübergabebefehlsnachricht;
wobei der Schritt des Sendens der D2D-Relaiskonfigurationsinformationen an die Quellbasisstation über die X2-Schnittstellennachricht Folgendes umfasst:
Senden, durch die Zielbasisstation, der relevanten Informationen über den D2D-Relaisknoten an die Quellbasisstation durch eine X2-Schnittstellenübergabeanforderungsbestätigungsnachricht.

14. System zum Umschalten eines Relaisknotens, das Folgendes umfasst:
ein erstes Sendemodul, das konfiguriert ist, um zu aktivieren, dass eine Quellbasisstation eines Vorrichtung-zu-Vorrichtung(D2D)-Relaisknotens oder eine Mobilverwaltungsinstanz (MME) relevante Informationen über den D2D-Relaisknoten an eine Zielbasisstation sendet; und
ein Konfigurationsmodul, das konfiguriert ist, um zu aktivieren, dass die Zielbasisstation entsprechend den relevanten Informationen über den D2D-Relaisknoten verarbeitet;
wobei die Zielbasisstation konfiguriert ist, um D2D-Relaiskonfigurationsinformationen für den D2D-Relaisknoten gemäß den relevanten Informationen über den D2D-Relaisknoten zu bestimmen und eine Übergabeanforderungsbestätigungsnachricht einschließlich der D2D-Relaiskonfigurationsinformationen an die Quellbasisstation zu senden;
wobei die Quellbasisstation ferner konfiguriert ist, um einen von der Zielbasisstation empfangenen Übergabebefehl an den D2D-Relaisknoten mittels einer Funkressourcensteuerungs(RRC)-Rekonfigurationsnachricht zu senden, wobei der Übergabebefehl die D2D-Relaiskonfigurationsinformationen einschließt, die für den D2D-Relaisknoten durch die Zielbasisstation konfiguriert sind;
wobei die relevanten Informationen über den D2D-Relaisknoten folgende Informationen umfassen:
Relaisfähigkeitsinformationen des D2D-Relaisknotens, wobei die Relaisfähigkeitsinformationen Folgendes umfassen: eine Angabe, ob ein D2D-Relais unterstützt werden soll; eine Angabe, ob ein D2D-Relais von einer UE zu einem Netzwerk unterstützt werden soll; und/oder eine Angabe, ob ein D2D-Relais von einer UE zu einer anderen UE unterstützt werden soll;
eine Angabe, ob als ein D2D-Relaisknoten gedient wird;
eine Angabe, ob ein Interesse besteht, als der D2D-Relaisknoten zu dienen;
eine Angabe, ob die Fähigkeit besteht, als der D2D-Relaisknoten zu dienen;
eine Angabe, ob autorisiert ist, als der D2D-Relaisknoten zu dienen;
einen Typ des D2D-Relaisknotens, der als der D2D-Relaisknoten dient oder das Interesse besteht, als dieser zu dienen oder die Fähigkeit besteht, als dieser zu dienen, oder der autorisiert ist, als dieser zu dienen, wobei der Typ des D2D-Relaisknotens Folgendes umfasst: einen D2D-Relaisknoten für ein Relais von der UE zu dem Netzwerk und einen D2D-Relaisknoten für ein Relais von einer UE zu einer anderen UE; und/oder
Informationen zu einer energiesparenden Konfiguration des D2D-Relaisknotens.

## Revendications

1. Procédé de commutation d'un nœud relais, comprenant :
l'envoi, par une station de base source d'un nœud relais de dispositif à dispositif, D2D, ou d'une entité de gestion mobile, MME, d'informations pertinentes concernant le nœud relais D2D à une station de base cible ; et
l'exécution, par la station de base cible, d'un processus correspondant selon les informations pertinentes concernant le nœud relais D2D ;
dans lequel l'étape consistant à exécuter, par la station de base cible, un processus correspondant selon les informations pertinentes concernant le nœud relais D2D comprend : la détermination, par la station de base cible, des informations de configuration de relais D2D pour le nœud relais D2D selon les informations pertinentes concernant le nœud relais D2D et l'envoi d'un message d'accusé de réception de demande de transfert comportant les informations de configuration de relais D2D à la station de base source ;
dans lequel le procédé comprend en outre : l'envoi, par la station de base source, d'une commande de transfert reçue de la station de base cible au nœud relais D2D au moyen d'un message de reconfiguration de commande de ressources radio, RRC, la commande de transfert comportant les informations de configuration de relais D2D configurées pour le nœud relais D2D par la station de base cible ;
dans lequel les informations pertinentes concernant le nœud relais D2D comprennent au moins l'une des informations suivantes :
des informations de capacité de relais du nœud relais D2D, les informations de capacité de relais comprenant au moins l'un des éléments suivants : une indication pour savoir s'il faut prendre en charge un relais D2D ; une indication pour savoir s'il faut prendre en charge un relais D2D d'un UE vers un réseau ; et une indication pour savoir s'il faut prendre en charge un relais D2D d'un UE vers un autre UE ;
une indication pour savoir s'il est servi en tant que nœud relais D2D ;
une indication pour savoir s'il présente un intérêt de servir en tant que nœud relais D2D ;
une indication pour savoir s'il a la capacité de servir en tant que nœud relais D2D ;
une indication pour savoir s'il est autorisé à servir en tant que nœud relais D2D ;
un type du nœud relais D2D qui est servi ou a un intérêt de servir ou a la capacité de servir ou est autorisé à servir en tant que nœud relais D2D, le type du nœud relais D2D comprenant : un nœud relais D2D pour un relais de l'UE vers le réseau, et un nœud relais D2D pour un relais d'un UE vers un autre UE ;
des informations de configuration d'économie d'énergie du nœud relais D2D.

2. Procédé selon la revendication 1, dans lequel l'étape d'envoi, par la MME, des informations pertinentes concernant le nœud relais D2D à la station de base cible comprend :
l'envoi, par la MME, des informations pertinentes concernant le nœud relais D2D à la station de base cible du nœud relais D2D par l'intermédiaire d'un message d'interface S1, le message d'interface S1 comprenant au moins l'un des messages suivants : un message de DEMANDE DE MODIFICATION DE CONTEXTE UE, et un message de CONFIRMATION DE DEMANDE DE COMMUTATION DE CONDUIT.

3. Procédé selon la revendication 1, dans lequel l'étape d'exécution d'un processus correspondant selon les informations pertinentes concernant le nœud relais D2D après la réception des informations pertinentes concernant le nœud relais D2D envoyées par la MME du nœud relais D2D comprend :
la détermination, par la station de base cible, des informations de configuration de relais D2D du nœud relais D2D, et l'envoi des informations de configuration de relais D2D au nœud relais D2D par l'intermédiaire d'une interface hertzienne.

4. Procédé selon la revendication 1, le procédé comprenant en outre :
avant l'envoi des informations pertinentes concernant le nœud relais D2D à la station de base cible, l'obtention, par la station de base source du nœud relais D2D, des informations pertinentes concernant le nœud relais D2D par le biais d'une interface hertzienne ou d'un message d'interface X2 ou d'un message d'interface S1, dans lequel le message d'interface X2 est un message de demande de transfert d'interface X2, et le message d'interface S1 comprend au moins l'un des messages suivants : un message de DEMANDE DE CONFIGURATION DE CONTEXTE INITIAL, un message de DEMANDE DE MODIFICATION DE CONTEXTE UE, un message de DEMANDE DE TRANSFERT et un message de CONFIRMATION DE DEMANDE DE COMMUTATION DE CONDUIT.

5. Procédé selon la revendication 1, dans lequel la station de base source du nœud relais D2D envoie les informations pertinentes concernant le nœud relais D2D à la station de base cible de l'une des manières suivantes :
en envoyant, par la station de base source du nœud relais D2D, des informations pertinentes concernant le nœud relais D2D à la station de base cible par le biais du message d'interface X2 ; et
en envoyant, par la station de base source du nœud relais D2D, des informations pertinentes concernant le nœud relais D2D à la station de base cible par le biais du message d'interface S1 ;
dans lequel l'étape d'envoi des informations pertinentes concernant le nœud relais D2D à la station de base cible par le biais du message d'interface S1 comprend :
l'envoi, par la station de base source, des informations pertinentes concernant le nœud relais D2D à la MME par le biais du message de demande de transfert ; puis, l'envoi, par la MME, des informations pertinentes concernant le nœud relais D2D à la station de base cible par le biais du message de demande de transfert d'interface S1 ;
dans lequel l'étape d'envoi des informations pertinentes concernant le nœud relais D2D à la station de base cible par le biais du message d'interface X2 comprend :
l'envoi, par la station de base source, des informations pertinentes concernant le nœud relais D2D à la station de base cible par l'intermédiaire du message de demande de transfert d'interface X2.

6. Procédé selon l'une quelconque des revendications 1 à 5, dans lequel les informations pertinentes concernant le nœud relais D2D comprennent en outre au moins l'une des informations suivantes :
des informations de ressources D2D utilisées par la découverte D2D effectuée entre le nœud relais D2D et un UE D2D servi par le nœud relais D2D ;
des informations de ressource D2D utilisées pour une communication D2D entre le nœud relais D2D et l'UE D2D servi par le nœud relais D2D ;
dans lequel les informations de ressource D2D comprennent au moins l'une des informations suivantes :
des informations d'indication de motif de sous-trame, des informations d'indication de cycle de sous-trame, des informations d'indication d'index de bloc de ressources de domaine de fréquence physique, des informations de groupe de ressources, des informations d'indication d'index de symboles et des informations concernant un réseau mobile terrestre public, RMTP, auquel appartient la ressource D2D ;
dans lequel les informations de configuration d'économie d'énergie du nœud relais D2D comprennent au moins l'une des informations suivantes :
une indication pour activer un mécanisme d'économie d'énergie de nœud relais, un temporisateur d'état actif de relais, un cycle de surveillance d'état inactif de relais, un décalage de trame/sous-trame de surveillance et une durée de surveillance.

7. Procédé selon la revendication 1, dans lequel l'indication pour savoir s'il est servi en tant que nœud relais D2D, l'indication pour savoir s'il présente un intérêt de servir en tant que nœud relais D2D, l'indication pour savoir s'il a la capacité de servir en tant que nœud relais D2D, et l'indication pour savoir s'il est autorisé à servir en tant que nœud relais D2D comprennent en conséquence au moins l'un des éléments suivants :
une indication pour savoir s'il est servi en tant que nœud relais pour un relais de l'UE vers le réseau ;
une indication pour savoir s'il présente un intérêt de servir en tant que nœud relais pour un relais de l'UE vers le réseau ;
une indication pour savoir s'il a la capacité de servir en tant que nœud relais pour un relais de l'UE vers le réseau ;
une indication pour savoir s'il est autorisé à servir en tant que nœud relais pour un relais de l'UE vers le réseau ;
l'indication pour savoir s'il est servi en tant que nœud relais D2D d'un UE vers un autre UE ;
l'indication pour savoir s'il présente un intérêt de servir en tant que nœud relais D2D d'un UE vers un autre UE ;
l'indication pour savoir s'il a la capacité de servir en tant que nœud relais D2D d'un UE vers un autre UE ; et
une indication pour savoir s'il est autorisé à servir en tant que nœud relais D2D pour un relais d'un UE vers un autre UE.

8. Procédé selon la revendication 1, dans lequel l'étape d'exécution d'un processus correspondant selon les informations pertinentes concernant le nœud relais D2D comprend en outre l'un des éléments suivants :
la détermination, par la station de base cible, d'effectuer un transfert, dans lequel la station de base cible prend en charge une fonction D2D correspondante, et la détermination, par la station de base cible, des informations de configuration de relais D2D du nœud relais D2D et l'envoi des informations de configuration de relais D2D au nœud relais D2D par l'intermédiaire de la station de base source ;
la détermination, par la station de base cible, d'effectuer le transfert, dans lequel la station de base cible ne prend pas en charge la fonction D2D correspondante, et la réponse, par la station de base cible, par un message de réponse de transfert qui exclut les informations de configuration de relais D2D du nœud relais D2D à la station de base source ; et
la détermination, par la station de base cible, de ne pas effectuer le transfert et la réponse par un message d'échec de transfert à la station de base source.

9. Procédé selon la revendication 8, dans lequel les raisons de la détermination de ne pas effectuer le transfert par la station de base cible comprennent au moins l'un des éléments suivants :
la station de base cible ne prend pas en charge la fonction de relais de l'UE D2D vers le réseau ou de l'UE D2D vers un autre UE ;
la station de base cible ne prend pas en charge la fonction de relais de l'UE D2D vers le réseau ;
la station de base cible ne prend pas en charge la fonction de relais de l'UE D2D vers un autre UE ; et
la station de base cible ne prend pas en charge une fonction d'économie d'énergie de relais D2D.

10. Procédé selon la revendication 8, dans lequel, après la détermination d'effectuer le transfert par la station de base cible, le fait de ne pas prendre en charge les fonctions D2D correspondantes par la station de base cible, et la réponse, par la station de base cible, par un message de réponse de transfert qui exclut les informations de configuration de relais D2D du nœud relais D2D à la station de base source, le procédé comprend en outre :
l'envoi, par la station de base source, d'informations d'indication au nœud relais D2D ;
la station de base source envoie les informations d'indication au nœud relais D2D par l'intermédiaire d'une commande de transfert d'interface hertzienne, les informations d'indication comprenant au moins l'un des éléments suivants : une indication de libération de connexion de relais D2D, une indication que la station de base cible ne prend pas en charge les fonctions de relais D2D et des informations de nœud relais D2D disponibles ; les informations de nœud relais D2D disponibles comprennent au moins l'un des éléments suivants : des informations de ressources de domaine temporel et/ou de domaine fréquentiel utilisées par un nœud relais D2D disponible, des informations d'identification du nœud relais D2D disponible.

11. Procédé selon la revendication 10, le procédé comprenant en outre :
après avoir reçu les informations d'indication envoyées par la station de base source, l'envoi, par le nœud relais D2D, des informations d'indication à l'UE D2D servi, les informations d'indication comprenant au moins l'un des éléments suivants : une indication de libération de connexion de relais D2D, une indication que la station de base cible ne prend pas en charge les fonctions de relais D2D et des informations de nœud relais D2D disponibles.

12. Procédé selon la revendication 8, dans lequel les informations de configuration de relais D2D comprennent au moins l'un des éléments suivants :
une indication pour savoir s'il doit servir en tant que nœud relais D2D ;
une indication pour savoir s'il doit servir en tant que nœud relais pour un relais de l'UE D2D vers le réseau ;
une indication pour savoir s'il doit servir en tant que nœud relais pour un relais de l'UE D2D vers un autre UE ;
un type du nœud relais D2D servi, le type du nœud relais D2D comprenant :
un nœud relais D2D pour un relais de l'UE vers le réseau ; et un nœud relais D2D pour un relais d'un UE vers un autre UE ;
des informations de ressource D2D qui peuvent être utilisées par la découverte D2D effectuée entre le nœud relais D2D et l'UE D2D servi, et/ou des informations de ressource D2D qui peuvent être utilisées pour une communication D2D entre le nœud relais D2D et l'UE D2D servi ; et
des informations de configuration d'économie d'énergie du nœud relais D2D.

13. Procédé selon la revendication 8, dans lequel l'étape de détermination des informations de configuration de relais D2D du nœud relais D2D et d'envoi des informations de configuration de relais D2D au nœud relais D2D par l'intermédiaire de la station de base source comprend :
l'envoi, par la station de base cible, des informations de configuration de relais D2D à la station de base source par l'intermédiaire de l'interface S1 ou du message d'interface X2, et l'envoi, par la station de base source, des informations de configuration de relais D2D au nœud relais D2D par l'intermédiaire de l'interface hertzienne ;
dans lequel l'étape d'envoi des informations de configuration de relais D2D à la station de base source par l'intermédiaire du message d'interface S1 comprend :
l'envoi, par la station de base cible, des informations pertinentes concernant le nœud relais D2D à la MME par l'intermédiaire d'un message d'accusé de réception de demande de transfert, et l'envoi, par la MME, des informations pertinentes concernant le nœud relais D2D à la station de base source par le biais d'un message de commande de transfert d'interface S1 ;
dans lequel l'étape d'envoi des informations de configuration de relais D2D à la station de base source par l'intermédiaire du message d'interface X2 comprend :
l'envoi, par la station de base cible, des informations pertinentes concernant le nœud relais D2D à la station de base source par l'intermédiaire d'un message d'accusé de réception de demande de transfert d'interface X2.

14. Système de commutation d'un nœud relais, comprenant :
un premier module d'envoi, configuré pour permettre à une station de base source d'un nœud relais de dispositif à dispositif, D2D, ou d'une entité de gestion mobile, MME, d'envoyer des informations pertinentes concernant le nœud relais D2D à une station de base cible ; et
un module de configuration, configuré pour permettre à la station de base cible de traiter en conséquence selon les informations pertinentes concernant le nœud relais D2D ;
dans lequel la station de base cible est configurée pour déterminer des informations de configuration de relais D2D pour le nœud relais D2D selon les informations pertinentes concernant le nœud relais D2D et envoyer un message d'accusé de réception de demande de transfert comportant les informations de configuration de relais D2D à la station de base source ;
dans lequel la station de base source est en outre configurée pour envoyer une commande de transfert reçue de la station de base cible au nœud relais D2D au moyen d'un message de reconfiguration de commande de ressources radio, RRC, la commande de transfert comportant les informations de configuration de relais D2D configurées pour le nœud relais D2D par la station de base cible ;
dans lequel les informations pertinentes concernant le nœud relais D2D comprennent au moins l'une des informations suivantes :
des informations de capacité de relais du nœud relais D2D, les informations de capacité de relais comprenant au moins l'un des éléments suivants : une indication pour savoir s'il faut prendre en charge un relais D2D ; une indication pour savoir s'il faut prendre en charge un relais D2D d'un UE vers un réseau ; et une indication pour savoir s'il faut prendre en charge un relais D2D d'un UE vers un autre UE ;
une indication pour savoir s'il est servi en tant que nœud relais D2D ;
une indication pour savoir s'il présente un intérêt de servir en tant que nœud relais D2D ;
une indication pour savoir s'il a la capacité de servir en tant que nœud relais D2D ;
une indication pour savoir s'il est autorisé à servir en tant que nœud relais D2D ;
un type du nœud relais D2D qui est servi ou a un intérêt de servir ou a la capacité de servir ou est autorisé à servir en tant que nœud relais D2D, le type du nœud relais D2D comprenant : un nœud relais D2D pour un relais de l'UE vers le réseau, et un nœud relais D2D pour un relais d'un UE vers un autre UE ;
des informations de configuration d'économie d'énergie du nœud relais D2D.
